(19) Europäisches Patentamt
European Patent Office
Office européen des brevets

(11) EP 0 583 744 B1

(12) EUROPÄISCHE PATENTSCHRIFT

(45) Veröffentlichungstag und Bekanntmachung des Hinweises auf die Patenterteilung:
**14.04.1999 Patentblatt 1999/15**

(51) Int Cl.[6]: **C11D 3/37**, C11D 17/00, B01J 2/30

(21) Anmeldenummer: **93112943.1**

(22) Anmeldetag: **12.08.1993**

# (54) Stabile Granulate für Wasch-, Reinigungs- und Desinfektionsmittel

Stable granulates for detergent, cleaning and desinfectant compositions

Granulats stables pour compositions détergentes, nettoyantes et désinfectantes

(84) Benannte Vertragsstaaten:
**AT BE CH DE ES FR GB IT LI NL**

(30) Priorität: **18.08.1992 DE 4227277**

(43) Veröffentlichungstag der Anmeldung:
**23.02.1994 Patentblatt 1994/08**

(73) Patentinhaber: **Clariant GmbH**
**65929 Frankfurt am Main (DE)**

(72) Erfinder:
- **Jaekel, Frank, Dr.**
  **D-65812 Bad Soden/Taunus (DE)**
- **Reinhardt, Gerd, Dr.**
  **D-65779 Kelkheim (Taunus) (DE)**
- **Nöltner, Gerhard**
  **D-65929 Frankfurt am Main (DE)**
- **Jacquinot, Eric**
  **F-60350 Attichy (FR)**
- **Funk, Rüdiger, Dr.**
  **D-65527 Niedernhausen (DE)**
- **Müller, Manfred**
  **D-63571 Gelnhausen (DE)**

(56) Entgegenhaltungen:
**EP-A- 6 655**
**EP-A- 80 222**
**EP-A- 356 240**
**DE-A- 3 232 635**
**DE-A- 3 316 513**
**US-A- 4 973 417**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 583 744 B1

## Beschreibung

Bei Granulaten, die im Bereich der Waschmittelindustrie eingesetzt werden, gilt deren Stabilität als ein wesentliches Qualitätskriterium.

Anorganische Persalze, wie Perborate oder Percarbonate, sind seit langem als Bleichmittelzusätze in Waschmitteln bekannt. Ihre optimale Bleichkraft entfalten sie jedoch erst bei Temperaturen oberhalb 60°C. Zu ihrer Aktivierung sind eine Reihe organischer Verbindungen, wie Tetraacetylethylendiamin (TAED) beschrieben, die während des Waschprozeßes mit Wasserstoffperoxid eine Peroxicarbonsäure freisetzen.

Daneben werden jedoch in neuerer Zeit auch eine Reihe von Peroxicarbonsäuren für den direkten Einsatz in Waschmitteln beschrieben.

Problematisch ist jedoch sowohl bei den Aktivatoren als auch bei den vorgefertigten Peroxicarbonsäuren ihre geringe Lagerstabilität in alkalischen Waschmittelformulierungen. Eine ausreichende Lagerstabilität kann bei diesen Substanzen durch Einsatz einer geeigneten Hüllsubstanz erreicht werden.

Aus US-A-4 900 113 ist der Einsatz von polymeren organischen Verbindungen, wie Polyacrylamid, Copolymeren von Acrylsäure, Methacrylsäure oder Maleinsäureanhydrid bzw. Stärke oder Celluloseethern als Hüllsubstanz bekannt.

Die US-A-4 126 573 beschreibt Granulate aus festen, bevorzugt aliphatischen Peroxicarbonsäuren, die mit oberflächenaktiven Substanzen (Tensiden) umhüllt sind.

Die EP-A-272 402 nennt den Einsatz von Homo- oder Copolymerisaten einer ungesättigten, 3 - 6 Kohlenstoffatome enthaltenden organischen Carbonsäure, z.B. Polyacrylate, als Umhüllungsmittel für Peroxicarbonsäuregranulate.

In US-A-4 973 417 sind Enzyme in granulierter Form beschrieben, die u.a. mit einem Copolymer aus Methacrylsäure und einem Acrylsäureester umhüllt sind.

EP-A-0 000 655 beschreibt ein Additiv für Waschmittel in granularer Form, das mit anorganischen Materialien wie beispielweise Siliciumdioxid gecoated sind.

EP-A-356 240 beschreibt biologisch wirksame Substanzen, wie zum Beispiel Enzyme, die in eine Matrix eines polymeren Materials eingebettet sind.

Trotz der bekannten Hüllsubstanzen besteht weiterhin ein Bedarf an geeigneten Hüllsubstanzen, die eine ausreichende Lagerstabilität der Granulate, insbesondere in Wasch-, Reinigungs- und Desinfektionsmitteln gewährleisten.

Gegenstand der Erfindung sind Granulate für den Einsatz in Wasch-, Reinigungs- und Desinfektionsmitteln, umfassend Wirksubstanz, Granulierhilfsmittel, Hüllsubstanz und gegebenenfalls zusätzliche Komponenten, wobei die Hüllsubstanz jeweils

a) aus Homopolymeren aus ungesättigten Sulfonsäuren oder
b) aus Copolymeren aus ungesättigten Sulfonsäuren und ungesättigten Carbonsäuren oder
c) aus Mischungen einer oder mehrerer dieser Bestandteile besteht,

erhalten durch Granulierung einer Mischung aus Wrksubstanz und Granulierhilfsmittel, Aufbringen einer wäßrigen Lösung der Hüllsubstanz und gegebenenfalls der zusätzlichen Komponenten und Trocknung.

Die wesentlichen Bestandteile der erfindungsgemäßen Granulate sind

- Wirksubstanz
- Granulierhilfsmittel
- zusätzliche Komponenten und
- Hüllsubstanz

Als Wirksubstanzen können verwendet werden:

- temperaturempfindliche Stoffe
- Bleichmittel und Bleichaktivatoren.

Beispiele für temperaturempfindliche Stoffe sind Enzyme, wie Lipasen und Amylasen.

Als Bleichmittel eignen sich organische Persalze, wie Perborate und Percarbonate in Gegenwart geeigneter Aktivatoren.
Bevorzugte Perborate sind die Alkaliperborate, insbesondere Natriumperborat.

Als Aktivatoren eignen sich bevorzugt Tetraacetylethylendiamin (TAED), Tetraacetylmethylendiamin, Tetraacetylglukoluril (TAGU), Diacetyldioxohexahydrotriazin (DADHT), Pentaacetylglucose (PAG), Acetoxibenzolsulfonat-Natrium, Nonanoyloxibenzolsulfonat-Natrium (NOBS) und Benzoyloxibenzolsulfonat-Natrium (BOBS).

Weitere geeignete Bleichmittel sind organische Persäuren. Hierzu zählen aliphatische Peroxicarbonsäuren, wie 1,12-Dodecandiperoxicarbonsäure (US-A-4 795 594), Perbernsteinsäure (DE-A-34 38 529) und Perglutarsäure (DE-A-35 39 036) sowie amidgruppenhaltige Peroxicarbonsäuren, wie N-Decanoyl-6-aminoperoxicapronsäure und 3-(N-Nonylcarbamoyl)-peroxipropionsäure (EP-A-170 386), Peroxiverbindungen der Phthalsäure, wie Monoperoxiphthalsäure und Peroxiverbindungen von Phthalsäurederivaten, wie Diimidoperoxicarbonsäuren.

Bevorzugte organische Persäuren sind Imidoperoxicarbonsäuren der Formel

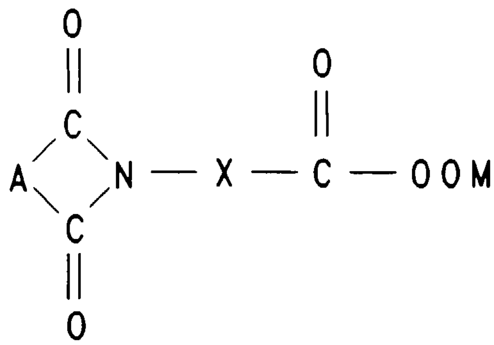

worin A eine Gruppe der Formeln

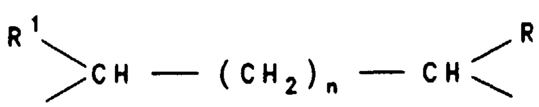 , 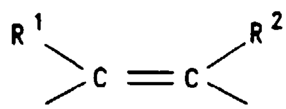 ,

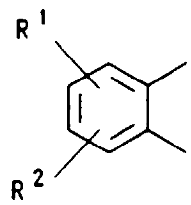 , 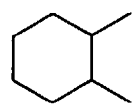

oder

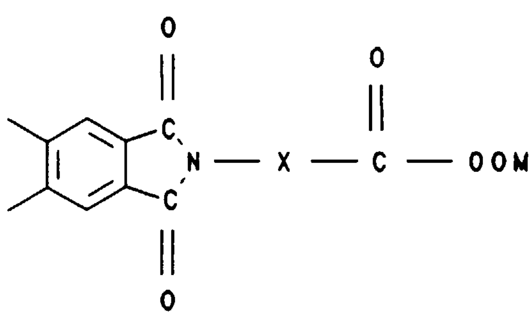

n die Zahlen 0,1 1 oder 2,

$R^1$ Wasserstoff, Chlor, Brom, $C_1$-$C_{20}$-Alkyl, $C_1$-$C_{20}$-Alkenyl, Aryl, bevorzugt Phenyl, oder Alkylaryl, bevorzugt $C_1$-$C_4$-Alkylphenyl,

$R^2$ Wasserstoff, Chlor, Brom oder eine Gruppe der Formel $-SO_3M$, $-CO_2M$ oder $-OSO_3M$,
M Wasserstoff, ein Alkali- oder Ammonium-Ion oder das Äquivalent eines Erdalkali-Ions, und
X $C_I$-$C_{19}$-, bevorzugt $C_3$-$C_{11}$-Alkylen, oder Arylen, bevorzugt Phenylen bedeuten.

Besonders bevorzugt sind Verbindungen dieser Formel, worin

A eine Gruppe der Formel

$$- CH_2 - (CH_2)_n - CH_2 -,$$

$$- CH_2 - CHR^1 - \text{oder}$$

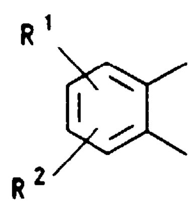

n die Zahlen 0 oder 1,
$R^1$ Wasserstoff, $C_1$-$C_{20}$-Alkyl oder $C_1$-$C_{20}$-Alkenyl,
$R^2$ Wasserstoff oder $CO_2M$,
X $C_3$-$C_{11}$-Alkylen und
M Wasserstoff, ein Alkali- oder Ammonium-Ion oder das Äquivalent eines Erdalkali-Ions bedeuten.

Beispiele für derartige bevorzugte Verbindungen sind ε-Phthalimidoperoxihexansäure (PAP), ε-[Dodecylsuccinimido] peroxihexansäure, γ-Phthalimidoperoxibuttersäure und ε-Trimellitimidoperoxihexansäure sowie deren Salze oder Gemische davon.

Die vorstehend genannten Imidoperoxicarbonsäuren sind bereits bekannt und werden in EP-A-349 940 näher beschrieben.

Ebenfalls geeignet sind Peroxisulfonsäuren, wie sie aus US-A-4 536 313 bekannt sind. Hierzu zählen insbesondere Sulfonylperoxicarbonsäuren, wie 4,4'-Sulfonyldiperoxicarbonsäure, 3,3'-Sulfonyldiperoxibenzoesäure, 4-Methylsulfonylperoxibenzoesäure und 3-Decylsulfonylperoxipropionsäure.

Die in den erfindungsgemäßen Granulaten eingesetzten Bleichmittel und Aktivatoren sind normalerweise bei Raumtemperatur Feststoffe mit einem Schmelzpunkt von über 60°C. Sie können in Pulverform, in trockenem oder feuchtem Zustand zur Granulierung eingesetzt werden.

Der Anteil der organischen Persäuren im Granulat beträgt mindestens 5, vorzugsweise 20 - 90, besonders bevorzugt 40 - 70 Gew.-%.

Der Anteil der Persalze im Granulat beträgt 80 - 99 Gew.-%.

Der Anteil der Bleichaktivatoren im Granulat liegt im Bereich von 70 - 99 Gew.-%.

Die Granulierhilfsmittel haben die Aufgabe durch Agglomerisation mit der Wirksubstanz das Grundgerüst des eigentlichen Granulates zu bilden. Die erfindungsgemäß verwendeten Granulierhilfsmittel lassen sich in zwei Gruppen einteilen:

- anorganische Sulfate und/oder Phosphate,
- organische Verbindungen mit oberflächenaktiven Eigenschaften (Tenside).

Als anorganische Sulfate/Phosphate eignen sich Sulfate/Phosphate von Alkali- oder Erdalkalimetallen, die gut wasserlöslich sind und nach dem Auflösen neutral oder sauer reagieren. Vorzugsweise verwendet werden Natriumsulfat, Natriumhydrogensulfat, Kaliumsulfat, Kaliumhydrogensulfat, Natriumdihydrogensulfat oder Magnesiumsulfat. Desweiteren können Mischungen dieser Salze eingesetzt werden.

Als oberflächenaktive Substanzen werden bevorzugt wasserlösliche, anionische Sulfate oder Sulfonate oder zwitterionische Tenside eingesetzt. Beispiele für derartige Verbindungen sind Alkali- oder Erdalkalimetallsalze von Alkylsulfaten oder -sulfonaten mit einer Alkylgruppe von 9 bis 22 Kohlenstoffatomen, welche aus natürlichen oder

synthetisch hergestellten Fettalkoholen erhalten werden oder aus Kohlenwasserstoffen, wie Paraffin. Weitere brauchbare Tenside, die Verwendung finden können, sind Salze von Alkylbenzolsulfonaten, bei denen die Alkylgruppe 9 bis 22 Kohlenstoffatome enthält und verzweigt oder unverzweigt sein kann. Alle genannten Verbindungen können gegebenenfalls ethoxylierte Gruppen im Molekül tragen. Bevorzugte Verbindungen sind sekundäre Alkansulfonate (®Hostapur SAS), Alkylsulfate und Alkylbenzolsulfonate.

Die Granulierhilfsmittel können in fester oder pastöser Form oder als Lösung für die Granulierung eingesetzt werden. Bevorzugtes Lösungsmittel ist in diesem Falle Wasser. Mischungen der Granulierhilfsmittel der Gruppe "anorganische Sulfate und/oder Phosphate" können in jedem Verhältnis mit denen der Gruppe "Tenside" für die Granulierung eingesetzt werden.

Der Anteil des Granulierhilfsmittels im erfindungsgemäßen Granulat beträgt in der Regel 5 bis 60, vorzugsweise 20 bis 50 Gew.-%, besonders bevorzugt 30 bis 40 Gew.-%.

In manchen Fällen kann es erwünscht sein, daß das Granulat bestimmte zusätzliche Komponenten enthält. Beispiele dafür sind chelatbildende Systeme, Farbstoffe und Mittel zur Regulierung des pH-Wertes.

Es ist bekannt, daß Metalle fähig sind, organische oder anorganische Perverbindungen katalytisch zu zersetzen. Zur Überwindung dieses Problems können dem Granulat bis zu 3 Gew.-% eines Chelatbildners zugesetzt werden. Bevorzugte Verbindungen sind anorganische oder organische Phosphate oder Phosphonate oder Aminomethylencarbonsäuren. Beispiele dafür sind Ethylendiamintetramethylenphosphon- oder -carbonsäuren oder Diethylentriaminpentamethylenphosphonsäure oder deren Salze.

Mittel zur Einstellung des pH-Wertes werden zur Veränderung oder Aufrechterhaltung des pH-Wertes innerhalb des Granulates eingesetzt. Beispiele dafür sind Zitronensäure, Fettsäure oder Bernsteinsäure oder Salze, wie Silicate, Phosphate oder Natriumbisulfat.

Die erfindungsgemäßen Granulate können Einzelstoffe der vorstehend genannten Wirksubstanzen, Granulierhilfsmittel und zusätzlichen Komponenten oder Mischungen davon enthalten.

Als Hüllsubstanzen werden jeweils

a) Homopolymere aus ungesättigten Sulfonsäuren oder
b) Copolymere aus ungesättigten Sulfonsäuren und ungesättigten Carbonsäuren oder
c) Mischungen einer oder mehrer dieser Bestandteile eingesetzt.

a) Die Homopolymere von ungesättigten Sulfonsäuren enthalten die Monomere Vinylsulfonsäure, Styrolsulfonsäure, 2-Acrylamido-2-methylpropansulfonsäure und/oder deren Salze, wobei die Vinylsulfonsäure als Monomer bevorzugt ist. Die Homopolymere haben ein durchschnittliches Molekulargewicht ($\overline{M}_w$) von 3000 bis 100.000 und werden bevorzugt als wäßrige Lösung mit einer Konzentration von 1 bis 60 Gew.-% auf das Granulat aufgebracht.
b) Die Copolymeren aus ungesättigter Sulfonsäure und ungesättigten Carbonsäuren enthalten in der Regel

3 - 97 Gew.-% einer ungesättigten Sulfonsäure und
97 - 3 Gew.-% einer ungesättigten Carbonsäure.

Geeignete Monomere der ungesättigten Sulfonsäuren sind Vinylsulfonsäure, Styrolsulfonsäure, 2-Acrylamido-2-methylpropansulfonsäure und/oder deren Salze, wobei die Vinylsulfonsäure als Monomer bevorzugt ist.

Üblicherweise werden als ungesättigte Carbonsäuren Acrylsäure, Methacrylsäure, Maleinsäure, Fumarsäure und/oder Itakonsäure sowie Salze davon eingesetzt. Die Verbindungen besitzen ein durchschnittliches Molekulargewicht ($\overline{M}_w$) von 800 bis 2.000.000, bevorzugt 2000 bis 50000. Die Copolymeren werden bevorzugt in wäßriger Lösung auf das Granulat aufgebracht.

Die Konzentration der Lösung beträgt in der Regel 1 bis 60 Gew.-%, bevorzugt 10 bis 30 Gew.-%.

Von Bedeutung ist jedoch, daß der pH-Wert der wäßrigen Polymerlösung zwischen 2,5 bis 7 liegt, bzw. eingestellt wird. Das Einstellen des pH-Wertes kann durch Zugabe von bei Raumtemperatur nicht flüchtigen Säuren, wie Benzoesäure, zur Polymerlösung erfolgen. Es ist aber auch denkbar, daß die nichtflüchtige Säure bereits während der Herstellung des Copolymers zugegeben wird und als ein weiteres Monomer eingebaut wird. Der Gehalt an nichtflüchtiger Säure beträgt üblicherweise bis zu 10 Gew.-%.

Im allgemeinen werden die Hüllsubstanzen einzeln eingesetzt.

Je nach Bedarf können auch Mischungen der Hüllsubstanzen eingesetzt werden. Bevorzugt werden Mischungen eingesetzt, die die Hüllsubstanzen in gleichem Gewichtsverhältnis enthalten.

Die Homo- und Copolymeren werden nach üblichen Verfahren der Fällungs- und Lösungspolymerisation erhalten.

Bei der Herstellung der erfindungsgemäßen Granulate werden die Wirksubstanz und das Granulierhilfsmittel in einem ersten Schritt so vermischt, daß durch Agglomeration geeignete Granulate entstehen. Dies kann in einem Kneter, Mischer, Extruder oder einer Pelletiermaschiene erfolgen. Als Mischer kommen solche in Frage, die chargenweise oder kontinuierlich betrieben werden können.
Beispiele für derartige Chargenmischer sind

"Dry Dispenser®" (Baker, Perkins, Peterborough, GB),
"Diosna-Pharmamix"® (Diercks, Osnabrück, DE),
"Matrix"® (Fielder Ltd., Eastlake, GB),
"Baumeister"® (Fa. Ruberg, Paderborn, DE),
"Ruberg Hochleistungsmischer"® (Fa. Ruberg, Paderborn, DE),
"MTI, Typ EM"® (MTL, Detmold, DE) und
"Eirich Mixers"® (Eirich Hardheim, DE).
"Lödige Pflugscharmischer"® (Fa. Lödige Maschinenfabrik, Paderborn)
"Lödige Recycler CB"® (Fa. Lödige Maschinenfabrik, Paderborn).
Beispielhaft für einen kontinuierlich betriebenen Mischer sei der
"Konax Durchlaufmischer"® (Fa. Ruberg, Paderborn, DE) erwähnt.

Beispiele für Extruder sind "Alma"® , "Unica"® , "Xtruder"® und "Werner Pfleiderer"®. Beispiele für gebräuchliche Pelletiermaschinen sind die Fabrikate der Fa. Simon Heesen oder auch der Maromarizer der Firma Russel Finings Ltd., London, GB. Weitere Apparate, die zur Herstellung der staubarmen Granulate nach dem erfindungsgemäßen Verfahren eingesetzt werden können, sind Fließbettmischer, in denen verschiedene Temperaturstufen eingestellt werden können.

Ein Kneter ist überall dort angebracht, wo durch Zugabe eines pastösen Granulierhilfsmittels eine intensive mechanische Durchmischung notwendig ist. Wird das Vermischen in einem Kneter, z.B. einem Brabender-Kneter, vorgenommen, so hat es sich als günstig erwiesen, das erhaltene Material noch zusätzlich in einem Granulator, z.B. einem Eirich-Granulator zu kompaktieren. Werden als Granulierhilfsmittel anorganische hydratisierbare Salze verwendet, so ist es vorteilhaft, die Wirksubstanz mit einem Wassergehalt von 50 bis 5, vorzugsweise 35 bis 20 Gew.-% einzusetzen. In diesem Fall kann das Vermischen z.B. in einem Lödige-Mischer vorgenommen werden. Die so erhaltenen Granulate bedürfen nach ihrer Trocknung keiner weiter Kompaktierung. Üblicherweise werden Granulate mit einer Korngröße von 0,5 bis 2 mm angestrebt. Dies kann durch Sieben des Granulats erreicht werden. Der Anteil an Gutkorn liegt im allgemeinen bei 80 %. Die darüber- oder darunterliegenden Anteile können in den Granulierprozeß zurückgeführt werden. Auf die so hergestellten Granulate wird in einem zweiten Schritt die wäßrige Lösung der Hüllsubstanz aufgebracht. Um einen möglichst vollständigen Überzug zu erhalten, müssen die Granulate während des Aufbringens der Lösung bewegt werden. Das Aufbringen erfolgt üblicherweise durch Aufsprühen, kann aber je nach apparativer Vorrichtung auch durch Einstrahlen, Eintropfen, Zugabe über einen Verteilerrechen, Zugabe über ein Verteilerwehr oder andere dem Fachmann bekannte Maßnahmen erfolgen. Eine besonders bevorzugte Form ist das Aufsprühen in einem Wirbelbett. Dabei kann gleichzeitig durch Erwärmen der Wirbelluft das überzogene Granulat getrocknet werden. Das Aufsprühen erfolgt so, daß eine weitere Agglomeration verhindert wird. Korngröße und Korngrößenverteilung werden deshalb durch den Umhüllungsprozeß nur unwesentlich beeinflußt.

Zusätzlich können in der wäßrigen Polymerlösung noch Chelatbildner, Farbstoffe und Mittel zur Regulierung des pH-Wertes gelöst sein. Die umhüllten Granulate müssen je nach Ansprühprozeß noch getrocknet werden.

Die erfindungsgemäßen Granulate sind weiße, frei fließende Granulate mit einem Schüttgewicht zwischen 300 und 1200 kg/$m^3$, vorzugsweise zwischen 500 und 800 kg/$m^3$.

Eine Nachbehandlung, z.B. Verpressen zu Tabletten oder größeren Agglomeraten ist möglich und für besondere Einsatzzwecke zweckmäßig.

Experimenteller Teil

I. Eingesetzte Hüllsubstanz

Polyvinylsulfonsäure

Die eingesetzte Polyvinylsulfonsäure hat ein mittleres Molekulargewicht von $M_w$ = 14000 und wird als 25,5 gew.-%ige wäßrige Lösung auf das Granulat aufgesprüht. Der pH-Wert einer 1 gew.-%igen wäßrigen Lösung beträgt 4,2.

II. Allgemeine Herstellvorschrift

In einem 2,5 l Lödige Mischer werden 1200 g trockene ε-Phthalimidoperoxicapronsäure, 500 g Wasser und 350 g wasserfreies Natriumsulfat 10 Minuten mit 140 Umdrehungen pro Minute gemischt und anschließend im Vakuumtrockenschrank bei 40°C bis zur Gewichtskonstanz getrocknet. Nach dem Sieben werden 90 % einer Gutkornfraktion zwischen 200 und 2000 µm erhalten.

450 g der zuvor erhaltenen Gutkornfraktion werden in einer Wirbelschichtanlage vorgelegt (Wirbelschichtanlage der Firma Aeromatic/Schweiz, Modell: STREA-1) und durch einen 28°C warmen Luftstrom von ca. 50 $m^3/h$ aufgewirbelt. Sobald eine stabile Wirbelschicht entstanden ist, wird durch eine im Gerät eingebaute Düse eine wäßrige Lösung der Hüllsubstanz aufgebracht. Die Menge der Lösung wird so gewählt, daß ein mit 9,1 % Hüllsubstanz ummanteltes Granulat entsteht. Nach dem Trocknen im Vakuumtrockenschrank bei 40°C und erneutem Absieben einer Gutkornfraktion zwischen 200 - 2000 µm liegt das fertige Granulat vor.

## III. Beispiele

### Beispiel 1

Das Granulat, das mit der Polyvinylsulfonsäure umhüllt wird, hat folgende Zusammensetzung: 69,4 % ε-Phthalimidopercapronsäure (entsprechend einem Aktivsauerstoffgehalt von 4,0 %), 19,6 % Natriumsulfat, 9,1 % Polyvinylsulfonsäure, 1,7 % Wasser.

### Vergleich

Das erfindungsgemäße Granulat wurde zum Vergleich gegen ein Granulat ausgeprüft, das mit Polyacrylsäure umhüllt ist und folgende Zusammensetzung hat: 70,5 % ε-Phthalimidopercapronsäure (entsprechend einem Aktivsauerstoffgehalt von 4,07 %), 18 % Natriumsulfat (Sulfatbestimmung nach der Bariumchlorid-methode), 10 % Polyacrylsäure, 0,5 % Wasser (Wasserbestimmung nach Karl Fischer).

## IV. Anwendungstechnische Versuche

### Lagerversuche

Lagerstabilität bei 38°C

Die Granulate werden in Glasflaschen, deren Deckel leicht geöffnet bleibt, in einem auf 38°C temperierten Trockenschrank gelagert. Proben werden etwa wöchentlich von den Granulaten entnommen, ihr Aktivsauerstoffgehalt bestimmt und das Ergebnis in Bezug zum Ausgangswert gesetzt.

| Granulat | Lagerzeit | | | | |
|---|---|---|---|---|---|
| | 7 Tage | 14 Tage | 21 Tage | 28 Tage | 46 Tage |
| Beispiel 1 | 99 % | 97 % | 97 % | 96 % | 96 % |
| Vergleich | 99 % | 98 % | 98 % | 96 % | 95 % |

Lagerstabilität bei 38°C und 80 % Luftfeuchtigkeit

Die Granulate werden in offenen Kristallisierschalen in einem Klimaschrank bei 38°C und einer Luftfeuchtigkeit von 80 % gelagert. Proben werden über eine Versuchsdauer von mehr als 4 Wochen in mehrtägigen Abständen entnommen, der Gehalt an Aktivsauerstoff ermittelt und das Ergebnis in Bezug zum Ausgangswert gesetzt.

| Granulat | Lagerzeit | | | | |
|---|---|---|---|---|---|
| | 4 Tage | 10 Tage | 18 Tage | 24 Tage | 31 Tage |
| Beispiel 1 | 99 % | 97 % | 94 % | 93 % | 91 % |
| Vergleich | 98 % | 97 % | 95 % | 94 % | 92 % |

Es zeigt sich, daß die Hüllsubstanzen sehr gut zum Umhüllen von Wirkstoffen, speziell von Persäure-Granulaten, geeignet sind. Die erfindungsgemäßen Persäure-Granulate weisen alle eine ausgezeichnete Lagerstabilität auf und sind auch unter praxisnahen Bedingungen lagerstabil.

## Patentansprüche

1. Granulate für den Einsatz in Wasch-, Reinigungs- und Desinfektionsmitteln, umfassend Wirksubstanz, Granulierhilfsmittel, Hüllsubstanz und gegebenenfalls zusätzliche Komponenten, wobei die Hüllsubstanz jeweils

   a) aus Homopolymeren aus ungesättigten Sulfonsäuren oder
   b) aus Copolymeren aus ungesättigten Sulfonsäuren und ungesättigten Carbonsäuren oder
   c) aus Mischungen einer oder mehrerer dieser Bestandteile besteht,

   erhalten durch Granulierung einer Mischung aus Wirksubstanz und Granulierhilfsmittel, Aufbringen einer wäßrigen Lösung der Hüllsubstanz und gegebenenfalls der zusätzlichen Komponenten und Trocknung.

2. Stabile Granulate gemäß Anspruch 1, dadurch gekennzeichnet, daß als Hüllsubstanz Homopolymere aus ungesättigten Sulfonsäuren, bevorzugt Polyvinylsulfonsäuren eingesetzt werden.

3. Stabile Granulate gemäß Anspruch 2, dadurch gekennzeichnet, daß die Homopolymere ein durchschnittliches Molekulargewicht ($\bar{M}_w$) von 3000 bis 100000 besitzen.

4. Stabile Granulate gemäß Anspruch 1 oder 2, dadurch gekennzeichnet, daß die Homopolymere aus ungesättigten Sulfonsäuren in Form einer 1 bis 60 gew.-%igen wäßrigen Lösung auf das Granulat aufgebracht werden.

5. Stabile Granulate gemäß Anspruch 1, dadurch gekennzeichnet, daß als Hüllsubstanz Copolymere aus ungesättigten Sulfonsäuren, bevorzugt Vinylsulfonsäuren und ungesättigten Carbonsäuren, bevorzugt Acrylsäure, Methacrylsäure, Maleinsäure, Fumarsäure und/oder Itaconsäure sowie deren Salze eingesetzt werden.

6. Stabile Granulate gemäß Anspruch 1 oder 5, dadurch gekennzeichnet, daß die Copolymere ein durchschnittliches Molekulargewicht ($\bar{M}_w$) von 800 - 2.000.000 besitzen und aus

   3 - 97 Gew.-% einer ungesättigten Sulfonsäure und/oder deren Salz
   97 - 3 Gew.-% einer ungesättigten Carbonsäure und/oder deren Salz und zusätzlich
   aus 0 - 10 Gew.-% einer nichtflüchtigen Säure, bevorzugt Benzoesäure,

   bestehen.

7. Stabile Granulate gemäß einem der Ansprüche 1, 5 oder 6, dadurch gekennzeichnet, daß die Copolymere aus ungesättigten Sulfonsäuren und ungesättigten Carbonsäuren in Form einer 1 bis 60 gew.-%igen, bevorzugt 10 - 30 gew.-%igen wäßrigen Lösung mit einem pH-Wert kleiner 7, bevorzugt zwischen 2,5 bis 7 auf das Granulat aufgebracht werden.

8. Verwendung von Granulaten gemäß Anspruch 1 als Bleich-, Oxidations- und Desinfektionsmittel.

9. Verwendung von Granulaten gemäß Anspruch 1 in Wasch-, Reinigungs- und Desinfektionsmitteln.

## Claims

1. Granules for use in detergents, cleaning agents and disinfectants comprising the active substance, granulating auxiliary, enveloping substance and, if appropriate, additional components, the enveloping substance in each case consisting of

   a) homopolymers of unsaturated sulfonic acids or
   b) copolymers of unsaturated sulfonic acids and unsaturated carboxylic acids or
   c) mixtures of one or more of these constituents,

   obtained by granulation of a mixture of the active substance and granulating auxiliary, application of an aqueous solution of the enveloping substance and, if appropriate, of the additional components, and drying.

2. Stable granules as claimed in claim 1, wherein a homopolymer of an unsaturated sulfonic acid, preferably a polyvinylsulfonic acid, is employed as the enveloping substance.

**3.** Stable granules as claimed in claim 2, wherein the homopolymer has an average molecular weight ($\overline{M}_W$) of 3,000 to 100,000.

**4.** Stable granules as claimed in claim 1 or 2, wherein the homopolymer of an unsaturated sulfonic acid is applied to the granules in the form of a 1 to 60 % strength by weight aqueous solution.

**5.** Stable granules as claimed in claim 1, wherein a copolymer of an unsaturated sulfonic acid, preferably a vinylsulfonic acid, and an unsaturated carboxylic acid, preferably acrylic acid, methacrylic acid, maleic acid, fumaric acid and/or itaconic acid or a salt thereof, is employed as the enveloping substance.

**6.** Stable granules as claimed in claim 1 or 5, wherein the copolymer has an average molecular weight ($\overline{M}_w$) of 800 - 2,000,000 and consists of

3 - 97 % by weight of an unsaturated sulfonic acid and/or salt thereof
97 - 3 % by weight of an unsaturated carboxylic acid and/or salt thereof and additionally of
0 - 10 % by weight of a non-volatile acid, preferably benzoic acid.

**7.** Stable granules as claimed in one of claims 1, 5 or 6, wherein the copolymer of an unsaturated sulfonic acid and an unsaturated carboxylic acid is applied to the granules in the form of a 1 to 60 % strength by weight, preferably 10 - 30 % strength by weight, aqueous solution having a pH of less than 7, preferably between 2.5 and 7.

**8.** The use of granules as claimed in claim 1 as a bleaching agent, oxidizing agent and disinfectant.

**9.** The use of granules as claimed in claim 1 in detergents, cleaning agents and disinfectants.

**Revendications**

**1.** Granulés à utiliser dans des compositions détergentes, nettoyantes et désinfectantes, comprenant une substance active, un adjuvant de granulation, une substance d'enrobage et éventuellement des composants additionnels, dans lesquels la substance d'enrobage est constituée respectivement

a) d'homopolymères d'acides sulfoniques insaturés ou
b) de copolymères d'acides sulfoniques insaturés et d'acides carboxyliques insaturés ou
c) de mélanges d'un ou de plusieurs de ces constituants,

obtenus par granulation d'un mélange de substance active et d'agent de granulation, application d'une solution aqueuse de la substance d'enrobage et éventuellement des composants additionnels et séchage.

**2.** Granulés stables selon la revendication 1, caractérisés en ce qu'on utilise comme substance d'enrobage des homopolymères d'acides sulfoniques insaturés, de préférence d'acides polyvinylsulfoniques.

**3.** Granulés stables selon la revendication 2, caractérisés en ce que les homopolymères possèdent une masse moléculaire moyenne ($\overline{M}_w$) de 3000 à 100000.

**4.** Granulés stables selon la revendication 1 ou 2, caractérisés en ce que les homopolymères d'acides sulfoniques insaturés sont appliqués sur les granulés sous la forme d'une solution aqueuse de 1 à 60% en poids.

**5.** Granulés stables selon la revendication 1, caractérisés en ce que l'on utilise comme substance d'enrobage des copolymères d'acides sulfoniques insaturés, de préférence d'acides vinylsulfoniques et d'acides carboxyliques insaturés, de préférence l'acide acrylique, l'acide méthacrylique, l'acide maléique, l'acide fumarique et/ou l'acide itaconique ainsi que leurs sels.

**6.** Granulés stables selon la revendication 1 ou 5, caractérisés en ce que les copolymères possèdent une masse moléculaire moyenne ($\overline{M}_w$) de 800 - 2 000 000 et sont constitués de

3 - 97% en poids d'un acide sulfonique insaturé et/ou de ses sels,
97 - 3% en poids d'un acide carboxylique insaturé et/ou de ses sels et en plus
de 0 - 10% en poids d'un acide non volatil, de préférence l'acide benzoïque.

**7.** Granulés stables selon l'une des revendications 1, 5 ou 6, caractérisés en ce que les copolymères d'acides sulfoniques insaturés et d'acides carboxyliques insaturés sont appliqués sur les granulés sous la forme d'une solution aqueuse de 1 à 60% en poids, de préférence de 10 - 30% en poids avec une valeur de pH inférieure à 7, de préférence entre 2,5 et 7.

**8.** Utilisation de granulés selon la revendication 1 comme agents de blanchiment, d'oxydation et de désinfection.

**9.** Utilisation de granulés selon la revendication 1 dans des compositions détergentes, nettoyantes et désinfectantes.